# Europäisches Patentamt
# European Patent Office
# Office européen des brevets

(19)

(11) Veröffentlichungsnummer: **0 192 641**
**B1**

(12)

# EUROPÄISCHE PATENTSCHRIFT

(45) Veröffentlichungstag der Patentschrift:
07.01.88

(51) Int. Cl.⁴: **B 62 D 5/06**

(21) Anmeldenummer: **84904116.5**

(22) Anmeldetag: **25.10.84**

(86) Internationale Anmeldenummer:
**PCT/EP 84/00333**

(87) Internationale Veröffentlichungsnummer:
**WO 85/01924 (09.05.85** Gazette 85/11)

(54) **ZAHNSTANGEN-HILFSKRAFTLENKUNG, INSBESONDERE FÜR KRAFTFAHRZEUGE.**

(30) Priorität: **05.11.83 EP 83111057**

(43) Veröffentlichungstag der Anmeldung:
**03.09.86 Patentblatt 86/36**

(45) Bekanntmachung des Hinweises auf die Patenterteilung:
**07.01.88 Patentblatt 88/1**

(84) Benannte Vertragsstaaten:
**DE FR GB**

(56) Entgegenhaltungen:
**EP - A - 0 078 879**
**FR - A - 2 282 363**
**FR - A - 2 460 246**
**GB - A - 808 373**

(73) Patentinhaber: **ZAHNRADFABRIK FRIEDRICHSHAFEN AKTIENGESELLSCHAFT, Löwentaler Strasse 100 Postfach 2520, D-7990 Friedrichshafen 1 (DE)**

(72) Erfinder: **LANG, Armin, Rheinstr. 10, D-7070 Schwäbisch Gmünd (DE)**
Erfinder: **KNÖDLER, Helmut, Elsternweg 6, D-7073 Lorch (DE)**

(74) Vertreter: **Raue, Reimund, Zahnradfabrik Friedrichshafen AG Löwentaler Strasse 100 Postfach 2520, D-7990 Friedrichshafen 1 (DE)**

# Beschreibung

Die Erfindung betrifft eine Zahnstangen-Hilfskraftlenkung, insbesondere für Kraftfahrzeuge, nach dem Oberbegriff des Anspruches 1.

Eine derartige Zahnstangen-Hilfskraftlenkung ist bekannt aus der DE-OS 25 36 894. Diese Lenkung besteht aus einem mechanischen Lenkgetriebe, an das in Fortsetzung der Lenkspindel und des Ritzels ein Steuerventil für die Steuerung eines Druckmittels zu und von einem Servomotor angebaut ist. Der Ventilschieber des Steuerventils wird durch eine in seiner Längsrichtung wirkende Reaktionskraft bewegt, die beim Drehen des schrägverzahnten Ritzels auf die Ritzelwelle wirkt und damit das Ritzel in axialer Richtung verschiebt. Durch das an dem mechanischen Lenkgetriebeteil angebaute Steuerventil weist die bekannte Zahnstangen-Hydrolenkung eine Länge auf, die einer Austauschbarkeit einer rein mechanischen Zahn-stangenlenkung durch eine Zahnstangen-Hilfs-kraftlenkung entgegensteht.

Der Erfindung liegt die Aufgabe zugrunde, die bekannte Zahnstangen-Hilfskraftlenkung derart zu verbessern, dass eine Austauschbarkeit mit einer rein mechanischen Zahnstangenlenkung möglich ist. Dies bedeutet, dass die Zahnstangen-Hilfskraftlenkung in Richtung Lenkspindel-Ritzel etwa gleich lang sein soll wie eine vergleichbare mechanische Zahnstangenlenkung. Da die Ver-wendung der Zahnstangen-Hilfskraftlenkung an-stelle einer rein mechanischen Lenkung erfolgen soll, muss auch der Energiebedarf für die Hilfskraftunterstützung auf einen möglichst kleinen Wert beschränkt bleiben.

Diese Aufgabe wird durch die im kennzeichnenden Teil des Anspruches 1 angegebenen Merkmale gelöst. Weitere vorteilhafte und zweckmässige Ausgestaltungen sind in den Unteransprüchen angegeben.

Durch die Anordnung der Steuereinrichtung neben dem Ritzel wird erreicht, dass die Länge des Lenkgetriebes in der Achsrichtung des Ritzels im wesentlichen nur von der Länge des Ritzels und seiner Lagerung bestimmt ist. Die Verwendung von Sitzventilen anstelle von bisher allgemein üblichen Kolbenventilen ermöglicht die Verwendung eines Druckspeichers. Wegen der fehlenden Leckverluste kann die Servopumpe sehr klein gehalten sein. Diese Möglichkeit der Energieeinsparung wird noch unterstützt durch die Tatsache, dass durch die spielfreie Mittenzentrierung die Len-kung unterhalb einer bestimmten Ansprech-schwelle wie eine normale mechanische Lenkung arbeitet. Wegen der Verwendung der Sitzventile kann im Bereich des mechanischen Getriebes auf die sonst bei Hilfskraftlenkungen notwendigen Dichtringe verzichtet werden, so dass die Lenkung unterhalb der hydraulischen Ansprechschwelle unbeeinflusst von durch Dichtringe hervorgerufe-nen Reibmomenten arbeiten kann.

Die spielfreie Mittenzentrierung wird mit einfachen Mitteln dadurch erreicht, dass die Zentrierfedern in der einen Richtung nur bis zu einem gehäusefesten Anschlag wirken können. Die Federkraft in dieser Richtung ist etwa doppelt so gross wie die Kraft der entgegengesetzt wirkenden Federn. Dadurch ist eine eindeutig definierte Mittenstellung möglich. Durch das Zusammenwirken der entgegengesetzt wirkenden Federn mit unterschiedlicher Federkraft wird erreicht, dass die Zentrierkraft in beiden Richtungen ungefähr gleich gross ist.

Die Einlass- und Auslass-Sitzventile sind parallel zu dem Ritzel in einem Bereich angeordnet, der von der Zahnstange nicht berührt wird. Um ein Verkanten der Mitnahmescheibe zu verhindern, ist zusätzlich zu den über die Ventilstössel wirkenden Federn eine dritte Feder, die nur einen kurzen Bauraum benötigt, im Bereich der Zahnstange angeordnet.

Die Erfindung wird im folgenden anhand eines in einer Zeichnung dargestellten Ausführungsbeispieles näher erläutert. Es zeigt:

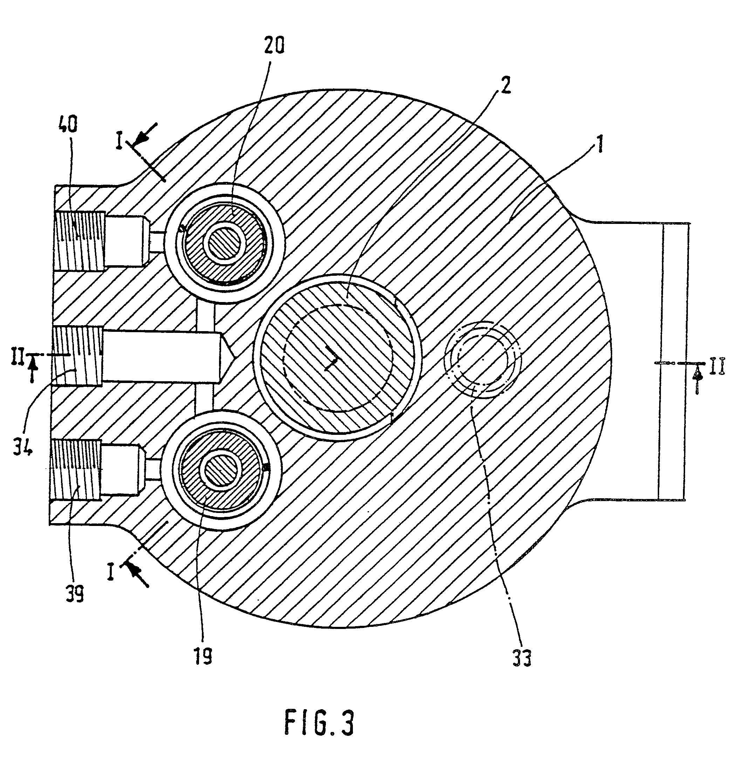

Fig. 1 den Längsschnitt durch die Zahnstangen-Hilfskraftlenkung nach der Linie I-I in Fig. 3,

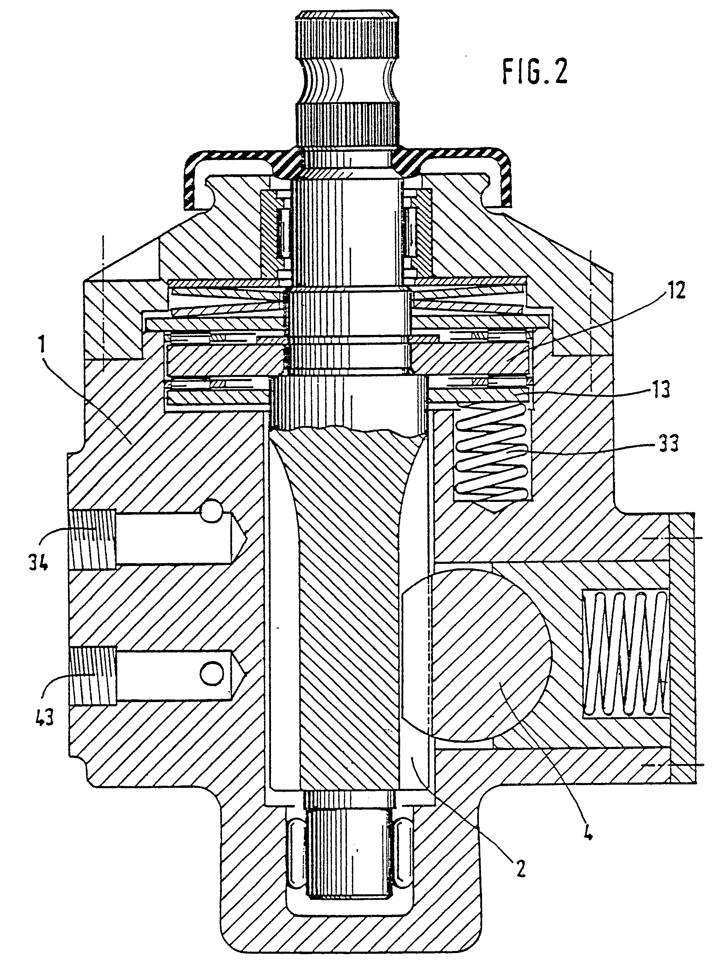

Fig. 2 den Längsschnitt nach der Linie II-II der Fig. 3,

Fig. 3 den Querschnitt nach der Linie III-III der Fig. 1.

In einem Lenkgehäuse 1 ist ein schräg- oder spiralverzahntes Ritzel 2 drehbar und in bestimmten Grenzen axial verschiebbar gelagert. Das Ritzel 2 trägt an seinem einen Ende einen Lenkspindelanschluss 3, für den Anschluss an ein Lenkorgan, beispielsweise ein nicht dargestelltes Lenkhandrad. Das Ritzel 2 steht über seine Schrägverzahnung in Eingriff mit einer Zahnstange 4, die in dem Lenkgehäuse 1 axial verschiebbar geführt ist.

Das Ritzel 2 ist durch zwei Radiallager 5 und 6 und durch zwei Axiallager 7 und 8 gelagert. Die axiale Fixierung erfolgt durch eine Lagerscheibe 9, die über eine erste Federanordnung 10 in der Form von Tellerfedern gegen eine Anlageschulter 11 in dem Lenkgehäuse 1 gedrückt wird. Das Axiallager 7 ist zwischen der Lagerscheibe 9 und einem mit dem Ritzel 2 verbundenen Zentrierbund 12 angeordnet. Auf der anderen Seite des Zentrierbundes 12 ist das Axiallager 8 angeordnet, das durch eine zweite (weiter unten näher beschriebene) Federanordnung über eine Mitnahmescheibe 13 gegen den Zentrierbung 12 gedrückt wird.

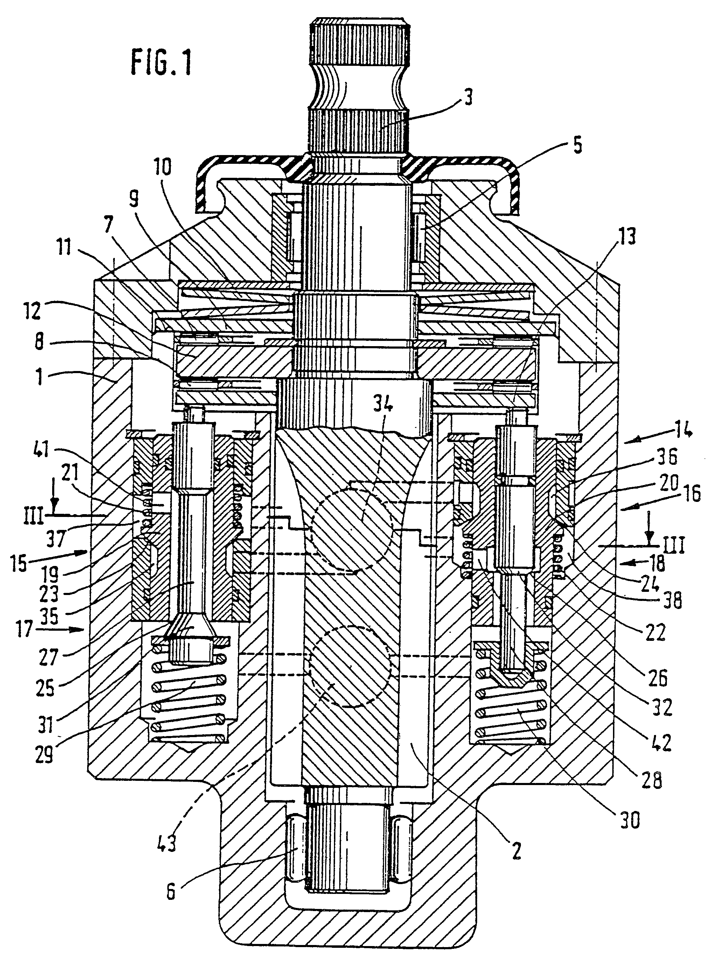

Zur Steuerung des von einer nicht dargestellten Servopumpe geförderten Druckmittels zu und von einem nicht dargestellten Servomotor dient eine Steuereinrichtung 14, das aus zwei Einlass-Sitzventilen 15 und 16 und zwei Auslass-Sitzventilen 17 und 18 gebildet ist. Die Einlass- und Auslass-Sitzventile sind im wesentlichen parallel zu dem Ritzel 2 angeordnet. Dabei können alle vier Sitzventile getrennt voneinander in dem Lenkgehäuse angeordnet sein. Besonders vorteilhaft für eine kompakte Ausführung ist jedoch eine Anordnung, in der jeweils ein Einlass-Sitzventil 15 bzw. 16 und ein Auslass-Sitzventil 17 bzw. 18 koaxial zueinander angeordnet sind (Fig. 1).

In der Neutralstellung der Steuereinrichtung 14 sind die Einlass-Sitzventile 15 und 16 geschlossen. Dies wird dadurch erreicht, dass die Ventilkörper 19 und 20 durch Druckfedern 21 und 22 gegen gehäusefeste Ventilsitze 23 und 24 gedrückt werden.

In Bohrungen der Ventilkörper 19 und 20 der Einlass-Sitzventile 15 und 16 sind Ventilsitze 25 und 26 für die Auslass-Sitzventile 17 und 18 gebildet. An zwei Ventilstösseln 27 und 28, die durch Druckfedern 29 und 30 gegen die Mitnahmescheibe 13 gedrückt werden, sind die Ventilkörper 31 und 32 der Auslass-Sitzventile 17 und 18 ausgebildet. Die Ventilsitze 25 und 26 sind den Schliesskörpern 31 und 32 derart zugeordnet, dass in der Neutralstellung des Steuerventiles 14 die Auslass-Sitzventile 17 und 18 geöffnet sind.

Die Druckfedern 29 und 30, die über die Ventilstössel 27 und 28 auf die Mitnahmescheibe 13 und damit auch auf den Zentrierbund 12 wirken, gehören zusammen mit einer dritten Druckfeder 33 zu der oben erwähnten zweiten Federanordnung. Die drei Druckfedern 29, 30 und 33 sind hinsichtlich ihrer Anordnung zueinander und ihrer Federkräfte derartig ausgelegt, dass die Mitnahmescheibe 13 nur in axialer Richtung belastet und frei von Querkräften ist. Dies wird durch eine symmetrische Anordnung der Druckfedern zueinander erreicht. Im einfachsten Fall sind drei gleiche Federn mit gleicher Teilung in dem Lenkgehäuse 1 angeordnet.

Um in der Neutralstellung des Steuerventils 14 eine genaue und spielfreie Zentrierung des Ritzels 2 und damit der Mitnahmescheibe 13 zu erreichen, ist die Kraft der ersten Federanordnung 10 etwa doppelt so gross wie die Kraft der durch die Druckfedern 29, 30, 33 gebildeten zweiten Federanordnung. Bei einer Verschiebung des Ritzels 2 nach oben (in Fig. 1) wirkt dieser Bewegung die Kraft der Federanordnung 10 entgegen, während die Kraft der zweiten Federanordnung die Bewegung unterstützt. Bei einer Verschiebung des Ritzels 2 nach unten wirkt nur die Kraft der zweiten Federanordnung dieser Bewegung entgegen. Damit sind in beiden Richtungen gleiche Kräfte wirksam.

Zur Versorgung der Lenkung mit von einer nicht dargestellten Förderpumpe gefördertem Druckmittel ist ein Zulaufanschluss 34 vorgesehen, der über entsprechende Kanäle mit an jedem der Einlass-Sitzventile 15 und 16 angeordneten Zulaufkammern 35 und 36 in Verbindung steht. Zwei Ringräume 37 und 38, die in Neutralstellung des Steuerventils von den Zulaufkammern 35 und 36 getrennt sind, stehen mit zwei Zylinderanschlüssen 39 und 40 in Verbindung. Ausserdem sind die Ringräume 37 und 38 über Bohrungen 41 und 42 und über die Neutralstellung des Steuerventils offenen Auslass-Sitzventile 17 und 18 mit einem Rücklaufanschluss 43 verbunden.

Im folgenden wird die Funktion der Steuereinrichtung 14 bei einer Betätigung der Zahnstangen-Hilfskraftlenkung näher beschrieben: In der Neutralstellung der Steuereinrichtung sind die beiden Zulaufkammern 35 und 36 hermetisch abgeschlossen, so dass kein Druckmittel verbraucht wird. Die beiden Zylinderanschlüsse 39 und 40 sind in dieser Neutralstellung mit dem Rücklaufanschluss 43 verbunden, wodurch ein ungehinderter Rücklauf des Lenkgetriebes möglich ist.

Wird die Lenkspindel so gedreht, dass durch die Schrägverzahnung des Ritzels 2 eine Kraftkomponente auf das Ritzel nach oben hin entsteht, so bleibt diese Kraftkomponente so lange unwirksam, bis die Kraft der ersten Federanordnung 10 überwunden ist. Nach Überwindung dieser Grenzkraft, bis zu der rein mechanisch gelenkt wird, verschiebt sich das Ritzel 2 nach oben. Durch die Kraft der Druckfedern 29, 30 und 33 werden die Ventilstössel 27 und 28 ebenfalls nach oben verschoben und in ständiger Anlage an der Mitnahmescheibe 13 gehalten. Bei dieser Bewegung schliesst zuerst das eine Auslass-Sitzventil 17, während sich das andere Auslass-Sitzventil 18 weiter öffnet. Wenn der Ventilkörper 31 des Auslass-Sitzventils 17 vollständig an dem Ventilsitz 25 des Auslass-Sitzventils 17 anliegt, wird bei weiterer Bewegung des Ventilstössels 27 der Ventilkörper 19 des einen Einlass-Sitzventils 15 mitgenommen und das Einlass-Sitzventil 15 wird geöffnet. Dadurch ergibt sich ein Druckmittelstrom von dem Zulaufanschluss 34 über die Zulaufkammer 35, das geöffnete Einlass-Sitzventil 15, den Ringraum 37 zu dem Zylinderanschluss 39. Der Zylinderanschluss 39 ist mit der einen Seite eines nicht dargestellten Servomotors verbunden. Von der anderen Seite des Servomotors fliesst das Druckmittel zurück zu dem zweiten Zylinderanschluss 40 und von dort über den Ringraum 38, die Bohrung 42 und das offene Auslass-Sitzventil 18 zu dem Rücklaufanschluss 43, der mit einem nicht dargestellten Druckmittelbehälter verbunden ist.

Bei einer Drehung des Ritzels 2 in der entgegengesetzten Richtung wird das Ritzel nach Überwindung der Grenzkraft der Druckfedern 29, 30 und 33 nach unten verschoben. Die Steuereinrichtung 14 arbeitet entsprechend und ermöglicht einen Druckmittelstrom in entgegengesetzter Richtung. Auch hierbei ist die Schaltfolge der Sitzventile so, dass zuerst das Auslass-Sitzventil 18 schliesst und danach der Ventilkörper 20 des Einlass-Sitzenventils 16 durch die weitere Bewegung des Ventilstössels 28 mitgenommen wird, bis das Einlass-Sitzventil 16 öffnet. Das andere Einlass-Sitzventil 15 bleibt geschlossen, das andere Auslass-Sitzventil 17 bleibt in seiner vollen Offenstellung.

*Bezugszeichen*

1 Lenkgehäuse
2 Ritzel
3 Lenkspindelanschluss
4 Zahnstange
5 Radiallager
6 Radiallager
7 Axiallager
8 Axiallager
9 Lagerscheibe
10 Erste Federanordnung
11 Anlageschulter
12 Zentrierbund
13 Mitnahmescheibe
14 Steuereinrichtung
15 Einlass-Sitzventil
16 Einlass-Sitzventil
17 Auslass-Sitzventil

18 Auslass-Sitzventil
19 Ventilkörper
20 Ventilkörper
21 Druckfeder
22 Druckfeder
23 Ventilsitz
24 Ventilsitz
25 Ventilsitz
26 Ventilsitz
27 Ventilstössel
28 Ventilstössel
29 Druckfeder
30 Druckfeder
31 Ventilkörper
32 Ventilkörper
33 Druckfeder
34 Zulaufanschluss
35 Zulaufkammer
36 Zulaufkammer
37 Ringraum
38 Ringraum
39 Zylinderanschluss
40 Zylinderanschluss
41 Bohrung
42 Bohrung
43 Rücklaufanschluss

**Patentansprüche**

1. Zahnstangen-Hilfskraftlenkung, insbesondere für Kraftfahrzeuge, mit einem schrägverzahnten, begrenzt axial verschiebbar in einem Lenkgehäuse gelagerten und durch die Kraft von Federn zentrierbaren Ritzel (2) und einer mit dem Ritzel in Eingriff stehenden Zahnstange (4) und mit einer durch die Axialbewegung des Ritzels betätigbaren Steuereinrichtung (14), dadurch gekennzeichnet, dass die Steuereinrichtung (14) durch je zwei Einlass-Sitzventile (15, 16) und Auslass-Sitzventile (17, 18) gebildet ist, die neben dem Ritzel (2) im Bereich der axialen Erstreckung des Ritzels (2) in dem Lenkgehäuse (1) angeordnet sind.

2. Zahnstangen-Hilfskraftlenkung nach Anspruch 1, dadurch gekennzeichnet, dass die Einlass-Sitzventile (15, 16) und Auslass-Sitzventile (17, 18) parallel zu dem Ritzel (2) angeordnet sind und dass deren Schliesskörper (19, 20, 31, 32) über eine mit dem Ritzel (2) verbundene Mitnahmescheibe (13) in gleichem Sinne wie das Ritzel (2) axial verschiebbar sind.

3. Zahnstangen-Hilfskraftlenkung nach Anspruch 2, dadurch gekennzeichnet, dass die Mitnahmescheibe (13) durch die Kraft einer zweiten Federanordnung (Druckfedern 29, 30, 33) an einen mit dem Ritzel (2) verbundenen Zentrierbund (12) gedrückt wird, der sich über ein Axiallager (7) an einer Lagerscheibe (9) abstützt, die durch die Kraft einer ersten Federanordnung (10) gegen eine Anlageschulter (11) in dem Lenkgehäuse (1) gedrückt wird, wobei die Kraft der ersten Federanordnung (10) in entgegengesetzter Richtung wirkend und etwa doppelt so gross ist wie die Kraft der zweiten Federanordnung (29, 30, 33).

4. Zahnstangen-Hilfskraftlenkung nach Anspruch 3, dadurch gekennzeichnet, dass die zweite Federanordnung aus drei einzelnen Druckfedern (29, 30, 33) besteht, die im wesentlichen symmetrisch zueinander in dem Lenkgehäuse (1) angeordnet sind, wobei eine (33) der Druckfedern direkt an der Mitnahmescheibe (13) angreift und die beiden anderen Druckfedern (29, 30) über je einen Ventilstössel (27, 28) der Auslass-Sitzventile (17, 18) an der Mitnehmerscheibe (13) angreifen.

5. Zahnstangen-Hilfskraftlenkung nach einem der Ansprüche 1 bis 4, dadurch gekennzeichnet, dass jeweils ein Einlass-Sitzventil (15 bzw. 16) und ein Auslass-Sitzventil (17 bzw. 18) koaxial zueinander angeordnet sind.

6. Zahnstangen-Hydrolenkung nach einem der Ansprüche 1 bis 5, dadurch gekennzeichnet, dass die Einlass-Sitzventile (15, 16) in Neutralstellung der Steuereinrichtung (14) geschlossen sind und die Auslass-Sitzventile (17, 18) offen sind.

7. Zahnstangen-Hilfskraftlenkung nach Anspruch 6, dadurch gekennzeichnet, dass in Neutralstellung der Steuereinrichtung (14) die Einlass-Sitzventile (15, 16) durch Druckfedern (21, 22) geschlossen sind und die Auslass-Sitzventile (17, 18) über ihre durch die Federn (29, 30) in Anlage an der Mitnahmescheibe (13) gehaltenen Ventilstössel (27, 28) in Offenstellung gehalten sind.

8. Zahnstangen-Hilfskraftlenkung nach Anspruch 7, dadurch gekennzeichnet, dass die Einlass-Sitzventile (15, 16) nur bei geschlossenen Auslass-Sitzventilen (17, 18) aufsteuerbar sind.

9. Zahnstangen-Hilfskraftlenkung nach Anspruch 8, dadurch gekennzeichnet, dass die Ventilkörper (31, 32) der Auslass-Sitzventile (17, 18) als Ventilstössel (27, 28) ausgebildet und unmittelbar betätigbar sind, dass die Ventilsitze (23, 24) der Einlass-Sitzventile (15, 16) gehäusefest sind und dass die Ventilkörper (19, 20) der Einlass-Sitzventile (15, 16) und die Ventilsitze (25, 26) der Auslass-Sitzventile (17, 18) jeweils fest miteinander verbunden sind.

**Claims**

1. Rack and pinion power steering system especially for motor vehicles, comprising a helically toothed pinion (2) supported in a steering housing in which it is centred by spring pressure, in which it has limited axial mobility, which meshes with a rack (4), and whose axial movement actuates a control device (14), characterized in that the control device (14) consists of two inlet seat valves (15, 16) and two outlet seat valves (17, 18) adjacent to the pinion (2) in the steering housing (1) within the extent of axial extent of the pinion (2).

2. Rack and pinion power steering system according to Claim 1, characterized in that the inlet seat valves (15, 16) and the outlet seat valves (17, 18) are arranged parallel to the pinion (2), and their closing heads (19, 20, 31, 32) are connected by means of a drive plate (13) to the pinion (2) so that they can be moved in the same axial direction as the pinion (2).

3. Rack and pinion power steering system according to Claim 2, characterized in that the drive plate (13) is forced by a second spring arrangement (pressure springs 29, 30, 33) against a centring collar (12) connected to the pinion (2), and the centring collar (12) is in turn supported by an axial bearing (7) against a supporting collar (11) within the steering housing (1), in such a way that the first spring arrangement (10) is acting in the opposite direction to the second spring arrangement (29, 30, 33) and can exert approximately twice the force of the second spring arrangement (29, 30, 33).

4. Rack and pinion power steering system according to Claim 3, characterized in that the second spring arrangement consists of three separate pressure springs (29, 30, 33), symmetrically arranged within the steering housing (1), in such a way that one of them (33) engages directly in the drive plate (13), while the other two pressure springs (29, 30) each engage in the drive plate (13) via one of the valve tappets (27, 28) in the outlet seat valves (17, 18).

5. Rack and pinion power steering system according to one of Claims 1 to 4, characterized in that each of the inlet seat valves (15, 16) is arranged coaxially with one of the outlet seat valves (17, 18).

6. Rack and pinion power steering system according to one of Claims 1 to 5, characterized in that the inlet seat valves (15, 16) are closed and the outlet seat valves (17, 18) are opened when the control device (14) is in its neutral position.

7. Rack and pinion power steering system according to Claim 6, characterized in that, with the control device (14) in its neutral position, its inlet seat valves (15, 16) are closed by the pressure springs (21, 22) and its outlet seat valves (17, 18) are held open by the springs (29, 30) which force the valve tappets (27, 28) against the drive plate (13).

8. Rack and pinion power steering system according to Claim 7, characterized in that the inlet seat valves (15, 16) can be actuated only when the outlet seat valves (17, 18) are closed.

9. Rack and pinion power steering system according to Claim 8, characterized in that the valve bodies (31, 32) of the outlet seat valves (17, 18) serve the function of valve tappets (27, 28) which can be actuated directly, that the valve seats (23, 24) of the inlet seat valves (15, 16) are fixed to the housing, and that the valve bodies (19, 20) of the inlet seat valves (15, 16) and the valve seats (25, 26) of the outlet seat valves (17, 18) are firmly connected to each other.

**Revendications**

1. Servodirection à crémaillère, notamment pour véhicules à moteur, comportant un pignon à denture oblique (2) qui peut coulisser axialement de manière limitée dans un boîtier de direction et qui est centré par la force des ressorts, une crémaillère (4) engrenée sur ce pignon, et un dispositif de commande (14) actionné par le déplacement axial du pignon, caractérisée en ce que le dispositif de commande (14) est formé par deux soupapes d'admission à siège (15, 16) et deux soupapes de décharge à siège (17, 18) qui sont disposées dans le boîtier de direction (1) à côté du pignon (2) et dans la zone d'extension axiale de ce pignon (2).

2. Servodirection à crémaillère selon la revendication 1, caractérisée en ce que les soupapes d'admission (15, 16) et les soupapes de décharge (17, 18) sont disposées parallèlement au pignon (2) et en ce que leurs éléments de fermeture (19, 20, 31, 32) sont entraînés en coulissement axial dans le même sens que le pignon (2) au moyen d'un plateau d'entraînement (13) relié au pignon (2).

3. Servodirection à crémaillère selon la revendication 2, caractérisée en ce que le plateau d'entraînement (13) est pressé par la force d'un second organe à ressorts (ressorts de compression 29, 30, 33) contre un collet de centrage (12) qui est relié au pignon (2) et qui s'appuie par un palier axial (7) contre un plateau de butée (9) qui est pressé par la force d'un premier organe à ressorts (10) contre un épaulement (11) du boîtier (1), la force du premier organe à ressorts (10) étant de sens opposé et d'amplitude approximativement double de celle du second organe à ressorts (29, 30, 33).

4. Servodirection à crémaillère selon la revendication 3, caractérisée en ce que le second organe à ressorts comporte trois ressorts de compression distincts (29, 30, 33) qui sont disposés sensiblement symétriquement les uns par rapport aux autres dans le boîtier (1), l'un (33) de ces ressorts étant appuyé directement contre le plateau d'entraînement (13), et les deux autres ressorts (29, 30) étant appuyés contre le plateau (13) chacun par l'intermédiaire d'un poussoir respectif (27, 28) des soupapes de décharge (17, 18).

5. Servodirection à crémaillère selon l'une des revendications 1 à 4, caractérisée en ce que chacune des soupapes d'admission (15, 16) est disposée coaxialement à une soupape de décharge respective (17, 18).

6. Servodirection à crémaillère selon l'une des revendications 1 à 5, caractérisée en ce que, dans la position neutre du dispositif de commande (14), les soupapes d'admission (15, 16) sont ouvertes et les soupapes de décharge (17, 18) sont fermées.

7. Servodirection à crémaillère selon la revendication 6, caractérisée en ce que, dans la position neutre du dispositif de commande (14), les soupapes d'admission (15, 16) sont fermées par des ressorts de compression (21, 22) et les soupapes de décharge (17, 18) sont maintenues ouvertes par leurs poussoirs (27, 28) que les ressorts (29, 30) maintiennent en appui contre le plateau d'entraînement (13).

8. Servodirection à crémaillère selon la revendication 7, caractérisée en ce que les soupapes de décharge (17, 18) sont réalisées sous la forme de poussoirs de soupapes (27, 28) et sont commandées directement, en ce que les sièges (23, 24) des soupapes d'admission (15, 16) sont fixes par rapport au boîtier, et en ce que les corps (19, 20) des soupapes d'admission (15, 16) sont solidaires des sièges (25, 26) des soupapes de décharge respectives (17, 18).

9. Servodirection à crémaillère selon la revendication 8, caractérisée en ce que les corps de soupapes (31, 32) des soupapes de décharge à siège (17, 18) sont réalisés sous la forme de poussoirs de soupapes (27, 28) et peuvent être commandés directement, en ce que les sièges (23, 24) des soupapes d'admission (15, 16) sont fixes par rapport au boîtier et les corps (19, 20) des soupapes d'admission (15, 16) sont solidaires des sièges (25, 26) des soupapes de décharge respectives (17, 18).

FIG.1

FIG.2

FIG.3